# FASCICULE DE BREVET EUROPEEN

(11) **EP 3 281 769 B1**
(45) Date de publication et mention de la délivrance du brevet: **28.08.2019**
(21) Numéro de dépôt: 17205659.0
(22) Date de dépôt: 06.12.2017
(51) Int. Cl.: B29C 49/48, B29C 49/06, B29L 31/00

(54) **DISPOSITIF DE MOULAGE POUR LA MISE EN OEUVRE DE PROCEDES DE MOULAGE A CHAUD ET DE MOULAGE A FROID**
FORMGUSSVORRICHTUNG FÜR DIE ANWENDUNG VON HEISS- UND KALTFORMVERFAHREN
MOULDING DEVICE FOR CARRYING OUT HOT MOULDING AND COLD MOULDING METHODS

(30) Priorité: 12.12.2016 FR 1662328
(43) Date de publication de la demande: 14.02.2018
(73) Titulaire: Sidel Participations, 76930 Octeville-sur-Mer (FR)
(72) Inventeur: CHOMEL, Nicolas, 76930 Octeville-sur-mer (FR)
(74) Mandataire: Grassin d'Alphonse, Emmanuel Jean Marie

(56) Documents cités:
- EP-A1- 2 703 146
- WO-A1-2016/166437
- FR-A1- 2 982 789
- US-A1- 2008 181 982

## Description

### DOMAINE TECHNIQUE DE L'INVENTION

L'invention porte sur un dispositif de moulage de récipients en matériau thermoplastique, notamment par soufflage, comportant :- au moins un porte-coquille sur lequel est destinée à être montée une coquille interchangeable de moulage comportant une face interne équipée d'une empreinte de moulage et une face externe d'appui prenant appui contre une face interne de support du porte-coquille,- au moins une coquille de moulage à froid dont la face d'appui est conformée pour être directement en contact avec la face de support du porte-coquille lorsqu'elle est montée,- des moyens de refroidissement de chaque porte-coquille permettant de refroidir la coquille de moulage à froid associée par conduction de chaleur entre la face de support et la face d'appui.

De tels dispositifs, selon l'art antérieur, sont décrits dans les documents brevets FR2982789A1 et EP2703146A1.

### ARRIERE PLAN TECHNIQUE DE L'INVENTION

De manière connue, les dispositifs de moulage de ce type permettent de réaliser des récipients, tels que des bouteilles, à partir de préformes en matériau thermoplastique. Les préformes sont préalablement chauffées à une température de transition vitreuse afin de les rendre suffisamment malléables. La préforme ainsi chauffée est insérée dans l'empreinte des coquilles du dispositif de moulage, puis une tuyère de soufflage injecte un fluide de formage sous pression, généralement de l'air, dans la préforme afin que les parois de cette dernière viennent épouser l'empreinte réalisée dans la face interne des coquilles.

Lorsque le récipient est destiné à être rempli d'un liquide à température ambiante, par exemple à moins de 25°C, un procédé de moulage à froid est mis en oeuvre. Aussitôt conformé en récipient, le matériau constituant les parois dudit récipient est alors refroidi rapidement dans le moule jusqu'à une température de consigne relativement basse, par exemple entre 7°C et 40°C, afin d'en figer la forme de manière définitive.

Cependant, la chaleur apportée par la préforme, préalablement chauffée à une température supérieure à 85°C et pouvant aller jusqu'à 130°Ca tendance à faire augmenter la température de l'empreinte de moulage au-delà de la température de consigne nécessaire pour figer le matériau plastique. En outre, lorsque le dispositif de moulage est utilisé dans une installation de production de récipients en grande série, de nombreux cycles de soufflage sont réalisés successivement dans un laps de temps très réduit. La durée de repos entre deux cycles est très inférieure au temps nécessaire pour évacuer les calories accumulées par les coquilles de moulage.

Pour éviter ce problème, il est donc connu d'équiper les dispositifs de moulage avec des moyens de refroidissement, par exemple un échangeur de chaleur comportant des canaux de circulation d'un fluide caloporteur.

La fabrication de moules comportant de tels canaux de refroidissement étant très onéreuse, il est connu de réaliser le dispositif de moulage en au moins deux parties, à savoir une coquille de moulage à froid comportant l'empreinte de moulage, et un porte-coquille comportant des moyens de refroidissement de la coquille de moulage. Ainsi, il est possible de modifier le format de l'empreinte en changeant uniquement de coquille de moulage à froid et en conservant le porte-coquille. La chaleur est évacuée par conduction entre une face externe de la coquille de moulage à froid qui est en contact avec une face interne du porte-coquille.

Lorsque les récipients en plastique doivent être remplis avec un liquide chaud, un récipient moulé par un procédé de moulage à froid risque de se rétracter et de déformer le récipient. Pour éviter ce phénomène de rétractation, il est connu de mettre en oeuvre un procédé de moulage à chaud. Dans un tel procédé, la coquille de moulage à chaud doit être chauffée à une température déterminée, par exemple entre 110°C et 150°C, lors de l'opération de moulage afin de conférer au matériau plastique constituant le récipient une structure résistante à la chaleur.

Différents moyens de chauffage de la coquille de moulage à chaud sont déjà connus. Il est ainsi connu de chauffer la coquille de moulage à chaud au moyen d'un circuit fluidique qui est réalisé dans l'épaisseur du moule. Un fluide caloporteur chaud alimente le circuit afin de chauffer la coquille de moulage à chaud.

Il est aussi connu d'agencer des résistances électriques chauffantes dans l'épaisseur de la coquille de moulage à chaud afin de chauffer électriquement le moule.

Cependant, lorsqu'une telle coquille de moulage à chaud est utilisée sur un porte-coquille équipé de moyens de refroidissement adaptés pour le moulage à froid, une partie de la chaleur produite par les moyens de chauffage est perdue en chauffant le fluide caloporteur contenu dans les moyens de refroidissement.

### BREF RESUME DE L'INVENTION

L'invention propose un dispositif de moulage du type décrit précédemment, caractérisé en ce qu'il comporte :
- au moins une coquille de moulage à chaud destinée à remplacer la coquille de moulage à froid sur le porte-coquille, chaque coquille de moulage à chaud étant équipée de moyens de chauffage de l'empreinte qui chauffent au moins une zone chauffée de sa face d'appui ;
- des moyens d'isolation thermique qui sont interposés entre au moins la zone chauffée de la face d'appui de la coquille de moulage à chaud et la face de support du porte-coquille.

Selon d'autres caractéristiques de l'invention :
- les moyens d'isolation thermique comportent une couche d'air réservée entre la zone chauffée de la face d'appui de la coquille de moulage à chaud et la face de support du porte-coquille ;
- la couche d'air est réservée au moyen de cales qui sont intercalées entre la face d'appui de la coquille de moulage à chaud et la face de support du porte-coquille ;
- chaque cale est réalisée en un matériau isolant thermiquement tel que de la fibre de verre ;
- les cales recouvrent moins de 10% de la surface de la face de support du porte-coquille ;
- les cales sont fixées au porte-coquille ;
- la face d'appui de la coquille de moulage à froid comporte des logements de forme complémentaire à la forme des cales pour permettre la mise en contact de la face d'appui de la coquille de moulage à froid avec la face de support du porte-coquille sur lequel les cales demeurent fixées ;
- les moyens de refroidissement sont conçus pour refroidir toute la surface de la face de support du porte-coquille ;
- les moyens d'isolation thermique recouvrent la totalité de la face d'appui de la coquille de moulage à chaud ;
- la face d'appui de la coquille de moulage à chaud comporte au moins une zone refroidie qui est directement en contact avec la face de support du porte-coquille pour être refroidie par les moyens de refroidissement ;
- les moyens de refroidissement des porte-coquille sont formés par au moins un réseau de canaux dans lequel circule un fluide caloporteur ;
- les moyens de chauffage de chaque coquille de moulage à chaud sont formés par au moins une résistance électrique chauffante reçue dans l'épaisseur de la coquille de moulage à chaud.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un jeu de deux coquilles de moulage complémentaires ;
- la figure 2 est une vue en perspective éclatée qui représente une coquille de moulage et un porte-coquille associé sur lequel la coquille est destinée à être montée de manière interchangeable ;
- la figure 3 est une vue en coupe longitudinale verticale selon le plan de coupe 3-3 de la figure 2 qui représente une coquille de moulage à froid montée sur le porte-coquille de la figure 2, le dispositif de moulage étant réalisé selon un premier et un deuxième mode de réalisation de l'invention ;
- la figure 4 est une vue similaire à celle de la figure 3 qui représente une coquille de moulage à chaud montée sur le porte-coquille de la figure 2, le dispositif de moulage étant réalisé selon l'un quelconque d'un premier, deuxième ou troisième mode de réalisation de l'invention ;
- la figure 5 est une vue similaire à celle de la figure 3 qui représente une coquille de moulage à froid montée sur le porte-coquille de la figure 2, le dispositif de moulage étant réalisé selon un troisième mode de réalisation de l'invention ;
- la figure 6 est une vue similaire à celle de la figure 3 qui représente une coquille de moulage à chaud comportant des zones refroidies.

### DESCRIPTION DETAILLEE DES FIGURES

Dans la suite de la description, on adoptera à titre non limitatif des orientations longitudinale, verticale et transversale indiquées par le trièdre "L,V,T" des figures. L'orientation verticale est utilisée à titre de repère géométrique sans rapport avec la direction de la gravité.

Dans la suite de la description, des éléments présentant une structure identique ou des fonctions analogues seront désignés par des mêmes références.

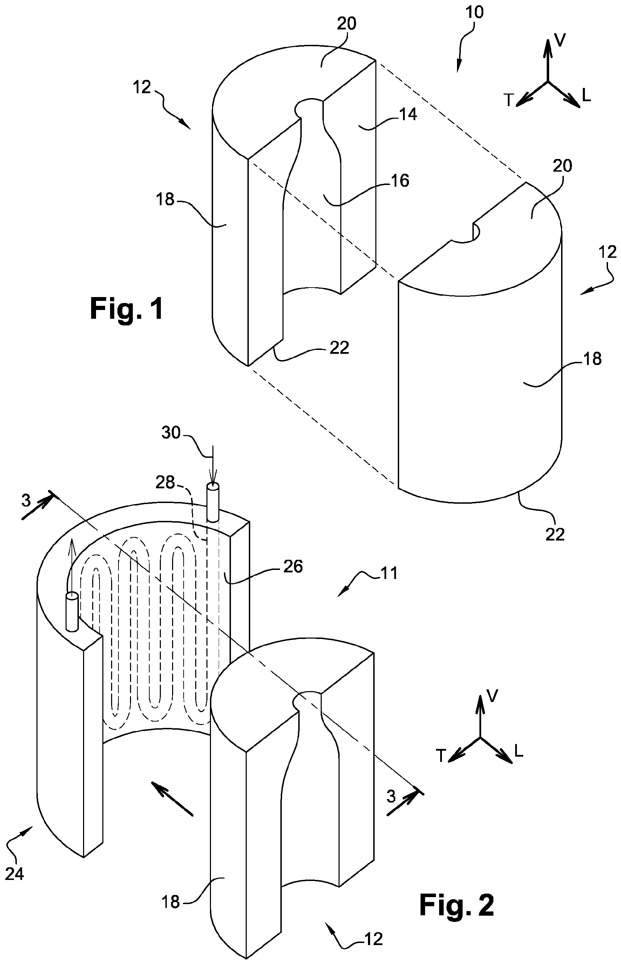

On a représenté à la figure 1 un jeu 10 de coquilles 12 de moulage complémentaires destinées à équiper un dispositif 11 de moulage par soufflage de récipients en matériau thermoplastique. Chaque coquille 12 de moulage comporte une face 14 interne qui est équipée d'une partie d'une empreinte 16 de moulage d'un récipient, et une face 18 externe d'appui opposée à la face 14 interne.

Chaque coquille 12 présente plus particulièrement une forme hémicylindrique d'axe "A" vertical. S'agissant d'un jeu 10 comportant deux coquilles 12 de moulage, la face 14 interne est ici une face plane transversale. Les deux coquilles 12 sont destinées à être jointe par contact plan entre leurs faces 14 internes pour reconstituer l'empreinte complète du récipient.

On notera ici que les coquilles 12 sont destinées à être complétées par une empreinte de fond de moule (non représentée) qui permettra de conformer le fond du récipient.

La face 18 externe présente une forme hémicylindrique.

Chaque coquille 12 est en outre délimitée par une face 20 plane d'extrémité supérieure et par une face 22 plane d'extrémité inférieure. L'empreinte 16 du récipient débouche dans la face 20 supérieure pour permettre l'injection de fluide de soufflage sous pression, tandis que l'empreinte 16 du récipient débouche vers le bas pour être fermée par le fond de moule.

Chaque coquille 12 du jeu 10 est destinée à être montée de manière interchangeable sur un porte-coquille 24 associé, comme cela est illustré à la figure 2. Ainsi, il est aisé de changer de jeu 10 de coquilles 12 lorsqu'on désire former des récipients de format différent et/ou de mettre en oeuvre un procédé de moulage différent, comme cela sera expliqué par la suite.

Le porte-coquille 24 comporte une face 26 interne d'appui contre laquelle la face 18 externe d'appui de la coquille 12 est destinée à prendre appui longitudinalement. En effet, lorsque les deux coquilles 12 du jeu 10 sont jointes et qu'un fluide de soufflage est injecté sous pression dans le récipient à former, le fluide exerce une pression tendant à écarter les deux coquilles 12 longitudinalement l'une de l'autre. Le porte-coquille 24 est conçu pour reprendre la totalité des efforts d'écartement subis par les coquilles 12 pour les transmettre à des supports de porte-coquille 24 (non représentés).

Le dispositif 11 de moulage représenté aux figures 2 à 6 est destiné à mettre en oeuvre de manière aisée aussi bien un procédé de moulage à froid qu'un procédé de moulage à chaud.

Lorsqu'un récipient est réalisé par un procédé de moulage à froid, l'empreinte 16 de moulage est maintenue à une température relativement basse, par exemple entre 7°C et 40°C.

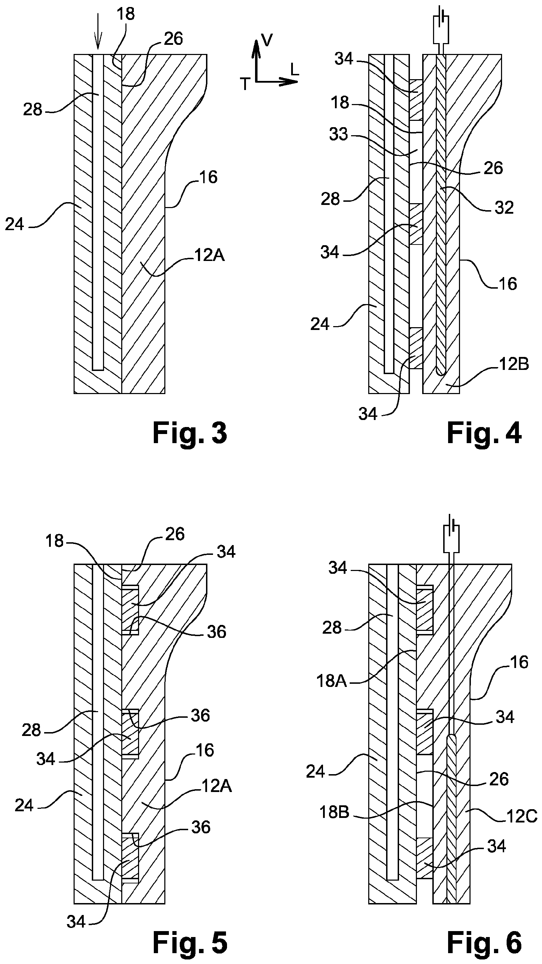

A cet effet, le dispositif 11 de moulage comporte au moins un jeu 10 de coquilles 12A de moulage à froid. La face 18 externe d'appui des coquilles 12A de moulage à froid est conformée pour que sensiblement la totalité de sa surface soit directement en contact avec la face 26 interne de support du porte-coquille 24 lorsqu'elle est montée, comme illustré à la figure 3. Ainsi, la majorité de la chaleur accumulée dans la coquille 12A de moulage à froid est transmise par conduction au porte-coquille 24 à travers la face 26 de support en contact avec la face 18 d'appui.

Les efforts d'écartement appliqués à la coquille 12A de moulage à froid sont ainsi transmis directement au porte-coquille 24.

Comme cela est représenté aux figures 2 à 6, le porte-coquille 24 est en outre équipé de moyens de refroidissement permettant d'évacuer la chaleur transmise par la coquille 12A de moulage à froid. Ainsi, les moyens de refroidissement de chaque porte-coquille 24 permettent de refroidir la coquille 12A de moulage à froid associée par conduction de chaleur entre la face 26 de support et la face 18 d'appui.

Les moyens de refroidissement sont ici conçus pour refroidir toute la surface de la face 26 de support du porte-coquille 24.

Dans le mode de réalisation représenté aux figures, les moyens de refroidissement sont formés par au moins un échangeur de chaleur comprenant un réseau de canaux 28 dans lequel circule un fluide caloporteur. Les canaux 28 sont réalisés dans l'épaisseur du porte-coquille 24, et ils serpentent à proximité de la face 26 de support pour favoriser l'évacuation de la chaleur.

Lorsqu'un récipient est réalisé par un procédé de moulage à chaud, l'empreinte 16 de moulage est maintenue à une température relativement élevée, par exemple entre 110°C et 150°C.

A cet effet, le dispositif 11 de moulage comporte au moins un jeu 10 de coquilles 12B de moulage à chaud. Chaque coquille 12B de moulage à chaud destinée à remplacer la coquille 12A de moulage à froid sur ledit porte-coquille 24. Chaque coquille 12B de moulage à chaud est équipée de moyens de chauffage de l'empreinte qui chauffent au moins une zone chauffée de sa face 18 d'appui.

Les moyens de chauffage de chaque coquille 12B de moulage à chaud sont formés par au moins une résistance 32 électrique chauffante reçue dans l'épaisseur de la coquille 12B, comme cela est représenté à la figure 4. Chaque résistance 32 est par exemple formée par une tige verticale qui est alimentée en électricité par la face 20 supérieure de la coquille 12B de moulage à chaud.

En variante non représentée de l'invention, les moyens de chauffage sont formés par un réseau de canaux réalisé dans l'épaisseur de la coquille de moulage à chaud et dans lequel circule un fluide de chauffage.

En général, un fluide 30 caloporteur contenu dans les canaux 28 des moyens de refroidissement du porte-coquille 24 n'est pas purgé pour des raisons de coûts et de temps de réalisation de l'opération. Or, le fluide 30 caloporteur risque d'absorber une partie de la chaleur produite par les moyens de chauffage. Ceci entraîne donc une surconsommation d'énergie pour maintenir la coquille 12B de moulage à chaud à la température élevée déterminée.

En outre, pour éviter que le fluide de refroidissement ne change de phase par excès de chauffage, il est maintenu dans mouvement dans les canaux 28. Ceci accentue l'effet de surconsommation évoqué précédemment.

De plus, la chaleur produite par les moyens de chauffage est susceptible d'être transmise aux différents éléments de l'installation sur laquelle le dispositif 11 de moulage est installé, au risque de dégrader certains composants de l'installation, tels que les roulements assurant l'ouverture et la fermeture du dispositif de moulage, et/ou de mettre en danger les opérateurs intervenant sur l'installation.

Pour pouvoir utiliser les coquilles 12B de moulage à chaud sur le même porte-coquille 24 que les coquilles 12A de moulage à froid, le dispositif 11 de moulage est équipé de moyens d'isolation thermique qui sont interposés entre au moins la zone chauffée de la face 18 d'appui de la coquille 12B de moulage à chaud et la face 26 de support du porte-coquille 24.

Dans les exemples représentés aux figures, les moyens d'isolation thermique sont formés par une couche 33 d'air inerte réservée entre la zone de chauffage de la coquille 12B de moulage à chaud et la face 26 de support du porte-coquille 24.

En variante, la couche 33 d'air est mise en mouvement entre la zone de chauffage de la coquille 12B de moulage à chaud et la face 26 de support de porte-coquille 24 pour évacuer les calories.

Dans une autre variante non représentée de l'invention, la couche d'air est remplie d'un matériau isolant thermiquement.

Pour pouvoir conserver la transmission de l'effort d'appui des coquilles 12B de moulage à chaud au porte-coquille 24 associé, la couche 33 d'air est réservée au moyen de cales 34 qui sont intercalées entre la face 18 d'appui de la coquille 12B de moulage à chaud et la face 26 de support du porte-coquille 24. Les efforts d'écartement subis par la coquille 12B de moulage à chaud sont ainsi transmis au porte-coquille 24 par l'intermédiaire des cales 34. Les cales 34 permettent d'écarter longitudinalement la face 18 d'appui de la coquille 12B de moulage à chaud de la face 26 de support du porte-coquille 24.

Chaque cale 34 est réalisée en un matériau isolant thermiquement tel que de la fibre de verre. Un tel matériau présente par exemple un coefficient de conductivité thermique inférieur à environ 1 W.m⁻¹.K⁻¹.

En variante, chaque cale peut être réalisée venue de matière avec la coquille et/ou avec le porte-coquille, par exemple par usinage au niveau de la face d'appui de la coquille ou au niveau de la face de support du porte-coquille 24. Un tel usinage permet de diminuer les surfaces de contact et donc de diminuer les échanges thermiques.

Les moyens d'isolation thermique recouvrent ainsi la totalité de la face 18 d'appui de la coquille 12B de moulage à chaud puisque chaque portion de la face 18 d'appui est soit en contact avec la couche 33 d'air, soit en contact avec une cale 34 isolante thermiquement.

Chaque cale 34 présente par exemple une forme de segment qui épouse la forme de la face 26 de support. Comme représenté aux figures, les cales 34 sont ici réparties verticalement en trois rangées globalement transversales, à savoir une rangée supérieure, une rangée centrale et une rangée inférieure. Chaque rangée présente avantageusement plusieurs cales 34 séparées afin de diminuer la surface que recouvrent ces cales 34. Par exemple, chaque rangée comporte trois cales 34 qui sont écartées transversalement l'une de l'autre.

Selon un premier mode de réalisation de l'invention qui est représenté aux figures 3 et 4, les cales 34 sont portées par la face 18 de support externe de chaque coquille 12B de moulage à chaud. Ainsi, lorsqu'une coquille 12A de moulage à froid est montée dans le porte-coquille 24, la totalité de sa surface est en contact avec la face 26 de support.

Lorsque la coquille 12B de moulage à chaud équipée des cales 34 est montée sur le porte-coquille 24, sa face 18 d'appui est écartée de la face 26 de support pour réserver la couche 33 isolante d'air. Ainsi, la chaleur produite par la résistance 32 chauffante est majoritairement utilisée pour chauffer l'empreinte 16.

Le dispositif 11 de moulage réalisé selon ce premier mode de réalisation permet de changer aisément de procédé de moulage par simple remplacement des coquilles 12A, 12B de moulage.

Néanmoins, ce premier mode de réalisation requiert d'équiper toutes les coquilles de moulage à chaud de cales 34, ce qui peut se révéler onéreux lorsque le fabricant de récipient est susceptible de réaliser de nombreux formats de récipients par moulage à chaud et/ou lorsque l'installation comporte de nombreux dispositifs de moulage, comme c'est par exemple le cas des machines de soufflage rotatives.

Selon un deuxième mode de réalisation de l'invention, les cales 34 sont fixées de manière démontable sur la face 18 d'appui de la coquille 12B de moulage à chaud.

Ainsi, il est possible d'utiliser seulement un ou deux jeux de cales 34 pour chaque collection de coquilles de moulage à chaud de différents format.

En variante, les cales sont fixées de manière démontable sur la face 26 de support du porte-coquille 24.

Dans ce deuxième mode de réalisation, l'installation et le fonctionnement du dispositif 11 de moulage est identique à ce qui a été décrit dans le premier mode de réalisation, à la différence qu'il est nécessaire de monter ou démonter les cales 34 lors de changement entre un procédé de moulage à froid et un procédé de moulage à chaud.

Ce deuxième mode de réalisation permet ainsi de réduire le coût de fabrication du dispositif 11 de moulage, mais il nécessite des opérations de montage et de démontage des cales.

Selon un troisième mode de réalisation de l'invention, qui sera décrit en référence aux figures 4 et 5, les cales 34 sont portées par la face 26 de support du porte-coquille 24.

Les cales 34 sont ici fixées à demeure sur le porte-coquille 24. Ainsi, les cales 34 sont destinées à demeurer fixées au porte-coquille 24 lors des opérations de remplacement de coquilles 12, quel que soit le type de coquille, pour moulage à chaud ou pour moulage à froid.

Lorsqu'une coquille 12B de moulage à chaud est montée sur le porte-coquille 24, comme représenté à la figure 4, sa face 18 de support est isolée thermiquement de la face 26 de support par la couche 33 d'air.

A la différence des deux premiers modes de réalisation, la face 18 d'appui de la coquille 12A de moulage à froid comporte des logements 36 de forme complémentaire à la forme des cales 34 pour permettre la mise en contact de la face 18 d'appui de la coquille 12A de moulage à froid avec la face 26 de support du porte-coquille 24 sans retirer les cales 34, comme cela est illustré à la figure 5.

Comme dans les modes de réalisation précédents, chaque cale 34 est réalisée en un matériau isolant thermiquement. Pour que la surface de contact entre la face 18 d'appui de la coquille 12A de moulage à froid avec la face 26 de support soit suffisante, les cales 34 couvrent avantageusement une surface inférieure ou égale à environ 10% de la surface de la face 26 de support.

Ce mode de réalisation permet ainsi de remplacer une coquille 12B de moulage à chaud par une coquille 12A de moulage à froid sans avoir à démonter les cales 34. En outre, un seul jeu de cales 34 est nécessaire pour ce mode de réalisation.

Selon une variante de réalisation de l'invention représentée à la figure 6 et applicable à l'un quelconque des modes de réalisation précédents, une coquille 12C de moulage à chaud est conçue pour que sa face d'appui présente des zones 18A refroidies et des zones 18B chauffées. A cet effet, les zones 18A refroidies sont conformées pour être directement en contact avec la face 26 de support du porte-coquille 24, tandis que les zones 18B chauffées sont conformées pour être isolées thermiquement de la face 26 de support du porte-coquille 24.

La figure 6 illustre une application de cette variante au troisième mode de réalisation de l'invention. La zone 18B chauffée est ici située dans une portion inférieure de la coquille 12C tandis que la zone 18A refroidie est ici située dans une portion supérieure. La zone 18A de face d'appui qui est refroidie présente des logements 36 qui sont destinés à loger les cales 34 situées en vis-à-vis pour permettre le contact direct entre la face 18 d'appui et la face 26 de support. Au contraire, la zone 18B de la face 18 d'appui qui est chauffée est agencée au même niveau que le fond des logements 36 de la zone 18A refroidie. Ainsi, cette zone 18B chauffée de la face d'appui est écartée de la face 26 de support pour réserver la couche 33 d'air.

Le dispositif de moulage réalisé selon les enseignements de l'invention permet ainsi de mettre en oeuvre aussi bien un procédé de moulage à froid qu'un procédé de moulage à chaud avec un porte-coquille muni de moyens de refroidissement.

L'invention permet notamment d'économiser de l'énergie en isolant la coquille de moulage à chaud du porte-coquille.

Le troisième mode de réalisation permet notamment de minimiser le nombre d'opérations à effectuer lors d'un changement de procédé tout en limitant le nombre de pièces équipant le dispositif de moulage.

## Revendications

1. Dispositif (11) de moulage de récipients en matériau thermoplastique, notamment par soufflage, comportant :
- au moins un porte-coquille (24) sur lequel est destinée à être montée une coquille (12A, 12B, 12C) interchangeable de moulage comportant une face (14) interne équipée d'une empreinte (16) de moulage et une face (18) externe d'appui prenant appui contre une face (26) interne de support du porte-coquille (24),
- au moins une coquille (12A) de moulage à froid dont la face (18) d'appui est conformée pour être directement en contact avec la face (26) de support du porte-coquille (24) lorsqu'elle est montée,
- des moyens (28, 30) de refroidissement de chaque porte-coquille (24) permettant de refroidir la coquille (12A) de moulage à froid associée par conduction de chaleur entre la face (26) de support et la face (18) d'appui ;
**caractérisé en ce qu'**il comporte :
- au moins une coquille (12B, 12C) de moulage à chaud destinée à remplacer la coquille (12A) de moulage à froid sur le porte-coquille (24), chaque coquille (12B, 12C) de moulage à chaud étant équipée de moyens (32) de chauffage de l'empreinte (16) qui chauffent au moins une zone chauffée de sa face (18) d'appui ;
- des moyens (33, 34) d'isolation thermique qui sont interposés entre au moins la zone chauffée de la face (18) d'appui de la coquille (12B, 12C) de moulage à chaud et la face (26) de support du porte-coquille (24).

2. Dispositif (11) selon la revendication précédente, **caractérisé en ce que** les moyens d'isolation thermique comportent une couche (33) d'air réservée entre la zone chauffée de la face (18) d'appui de la coquille (12B, 12C) de moulage à chaud et la face (26) de support du porte-coquille (24).

3. Dispositif (11) selon la revendication précédente, **caractérisé en ce que** la couche (33) d'air est réservée au moyen de cales (34) qui sont intercalées entre la face (18) d'appui de la coquille (12B, 12C) de moulage à chaud et la face (26) de support du porte-coquille (24).

4. Dispositif (11) selon la revendication précédente, **caractérisé en ce que** chaque cale (34) est réalisée en un matériau isolant thermiquement tel que de la fibre de verre.

5. Dispositif (11) selon l'une quelconque des revendications 3 ou 4, **caractérisé en ce que** les cales (34) recouvrent moins de 10% de la surface de la face (26) de support du porte-coquille (24).

6. Dispositif (11) selon l'une quelconque des revendications 3 à 5, **caractérisé en ce que** les cales (34) sont fixées au porte-coquille (24).

7. Dispositif (11) selon l'une quelconque des revendications 3 à 6, **caractérisé en ce que** la face (18) d'appui de la coquille (12A) de moulage à froid comporte des logements (36) de forme complémentaire à la forme des cales (34) pour permettre la mise en contact de la face (18) d'appui de la coquille (12A) de moulage à froid avec la face (26) de support du porte-coquille (24) sur lequel les cales (34) demeurent fixées.

8. Dispositif (11) selon l'une quelconque des revendications précédentes, **caractérisé en ce que** les moyens de refroidissement sont conçus pour refroidir toute la surface de la face (26) de support du porte-coquille (24).

9. Dispositif (11) selon l'une quelconque des revendications précédentes, **caractérisé en ce que** les moyens d'isolation thermique recouvrent la totalité de la face (18) d'appui de la coquille (12B) de moulage à chaud.

10. Dispositif (11) selon l'une quelconque des revendications précédentes, **caractérisé en ce que** la face (18) d'appui de la coquille (12C) de moulage à chaud comporte au moins une zone (18A) refroidie qui est directement en contact avec la face (26) de support du porte-coquille (24) pour être refroidie par les moyens de refroidissement.

11. Dispositif (11) selon l'une quelconque des revendications précédentes, **caractérisé en ce que** les moyens de refroidissement des porte-coquille (24) sont formés par au moins un réseau de canaux (28) dans lequel circule un fluide (30) caloporteur.

12. Dispositif (11) selon l'une quelconque des revendications précédentes, **caractérisé en ce que** les moyens de chauffage de chaque coquille (12B, 12C) de moulage à chaud sont formés par au moins une résistance (32) électrique chauffante reçue dans l'épaisseur de la coquille (12B, 12C) de moulage à chaud.

## Patentansprüche

1. Vorrichtung (11) zum Formen von Behältern aus Thermoplast, insbesondere durch Blasformen, die aufweist:
- mindestens einen Schalenträger (24), auf den eine austauschbare Formgebungsschale (12A, 12B, 12C) montiert werden soll, die eine mit einem Formhohlraum (16) ausgestattete Innenseite (14) und eine Auflage-Außenseite (18) aufweist, die gegen eine innere Stützseite (26) des Schalenträgers (24) aufliegt,
- mindestens eine Kaltformgebungsschale (12A), deren Auflageseite (18) gestaltet ist, um direkt mit der Stützseite (26) des Schalenträgers (24) in Kontakt zu sein, wenn sie montiert ist,
- Kühleinrichtungen (28, 30) jedes Schalenträgers (24), die es ermöglichen, die zugeordnete Kaltformgebungsschale (12A) durch Wärmeleitung zwischen der Stützseite (26) und der Auflageseite (18) zu kühlen;
**dadurch gekennzeichnet, dass** sie aufweist:
- mindestens eine Warmformgebungsschale (12B, 12C), die dazu bestimmt ist, die Kaltformgebungsschale (12A) auf dem Schalenträger (24) zu ersetzen, wobei jede Warmformgebungsschale (12B, 12C) mit Heizeinrichtungen (32) des Formhohlraums (16) ausgestattet ist, die mindestens einen erwärmten Bereich ihrer Auflageseite (18) erwärmen;
- Wärmeisolierungseinrichtungen (33, 34), die zwischen mindestens dem erwärmten Bereich der Auflageseite (18) der Formgebungsschale (12B, 12C) und der Stützseite (26) des Schalenträgers (24) eingefügt sind.

2. Vorrichtung (11) nach dem vorhergehenden Anspruch, **dadurch gekennzeichnet, dass** die Wärmeisolierungseinrichtungen eine Luftschicht (33) aufweisen, die zwischen dem erwärmten Bereich der Auflageseite (18) der Warmformgebungsschale (12B, 12C) und der Stützseite (26) des Schalenträgers (24) ausgespart ist.

3. Vorrichtung (11) nach dem vorhergehenden Anspruch, **dadurch gekennzeichnet, dass** die Luftschicht (33) mittels Keilen (34) ausgespart wird, die zwischen die Auflageseite (18) der Warmformgebungsschale (12B, 12C) und die Stützseite (26) des Schalenträgers (24) eingeschoben sind.

4. Vorrichtung (11) nach dem vorhergehenden Anspruch, **dadurch gekennzeichnet, dass** jeder Keil (34) aus einem wärmeisolierenden Werkstoff wie Glasfaser hergestellt ist.

5. Vorrichtung (11) nach einem der Ansprüche 3 oder 4, **dadurch gekennzeichnet, dass** die Keile (34) mindestens 10% der Fläche der Stützseite (26) des Schalenträgers (24) bedecken.

6. Vorrichtung (11) nach einem der Ansprüche 3 bis 5, **dadurch gekennzeichnet, dass** die Keile (34) am Schalenträger (24) befestigt sind.

7. Vorrichtung (11) nach einem der Ansprüche 3 bis 6, **dadurch gekennzeichnet, dass** die Auflageseite (18) der Kaltformgebungsschale (12A) Aufnahmen (36) komplementärer Form zur Form der Keile (34) aufweist, um den Kontakt der Auflageseite (18) der Kaltformgebungsschale (12A) mit der Stützseite (26) des Schalenträgers (24) zu ermöglichen, auf dem die Keile (34) befestigt bleiben.

8. Vorrichtung (11) nach einem der vorhergehenden Ansprüche, **dadurch gekennzeichnet, dass** die Kühleinrichtungen konzipiert sind, um die ganze Fläche der Stützseite (26) des Schalenträgers (24) zu kühlen.

9. Vorrichtung (11) nach einem der vorhergehenden Ansprüche, **dadurch gekennzeichnet, dass** die Wärmeisolierungseinrichtungen die Gesamtheit der Auflageseite (18) der Warmformgebungsschale (12B) bedecken.

10. Vorrichtung (11) nach einem der vorhergehenden Ansprüche, **dadurch gekennzeichnet, dass** die Auflageseite (18) der Warmformgebungsschale (12C) mindestens einen gekühlten Bereich (18A) aufweist, der direkt mit der Stützseite (26) des Schalenträgers (24) in Kontakt ist, um von den Kühleinrichtungen gekühlt zu werden.

11. Vorrichtung (11) nach einem der vorhergehenden Ansprüche, **dadurch gekennzeichnet, dass** die Kühleinrichtungen der Schalenträger (24) von mindestens einem Netz von Kanälen (28) gebildet werden, in dem ein Wärmeträgerfluid (30) fließt.

12. Vorrichtung (11) nach einem der vorhergehenden Ansprüche, **dadurch gekennzeichnet, dass** die Heizeinrichtungen jeder Warmformgebungsschale (12B, 12C) von mindestens einem elektrischen Heizwiderstand (32) gebildet werden, der in der Dicke der Warmformgebungsschale (12B, 12C) aufgenommen wird.

## Claims

1. Device (11) for moulding containers made of thermoplastic material, in particular by blow moulding, comprising:
- at least one shell carrier (24) on which there is intended to be mounted an interchangeable moulding shell (12A, 12B, 12C) comprising an inner face (14) equipped with a moulding cavity (16) and an outer bearing face (18) that bears against an inner support face (26) of the shell carrier (24),
- at least one cold moulding shell (12A) whose bearing face (18) is shaped to be in direct contact with the support face (26) of the shell carrier (24) when the shell is mounted,
- means (28, 30) for cooling each shell carrier (24), serving to cool the associated cold moulding shell (12A) by thermal conduction between the support face (26) and the bearing face (18);
**characterized in that** it comprises:
- at least one hot moulding shell (12B, 12C) which is intended to replace the cold moulding shell (12A) on the shell carrier (24), each hot moulding shell (12B, 12C) being equipped with means (32) for heating the cavity (16), which means heat at least one heated region of its bearing face (18);
- thermal insulation means (33, 34) that are interposed between at least the heated region of the bearing face (18) of the hot moulding shell (12B, 12C) and the support face (26) of the shell carrier (24).

2. Device (11) according to the preceding claim, **characterized in that** the thermal insulation means comprise a layer (33) of air maintained between the heated region of the bearing face (18) of the hot moulding shell (12B, 12C) and the support face (26) of the shell carrier (24).

3. Device (11) according to the preceding claim, **characterized in that** the layer (33) of air is maintained by means of spacers (34) that are interposed between the bearing face (18) of the hot moulding shell (12B, 12C) and the support face (26) of the shell carrier (24).

4. Device (11) according to the preceding claim, **characterized in that** each spacer (34) is made of a thermally insulating material such as glass fibre.

5. Device (11) according to either one of Claims 3 and 4, **characterized in that** the spacers (34) cover less than 10% of the surface of the support face (26) of the shell carrier (24).

6. Device (11) according to any one of Claims 3 to 5, **characterized in that** the spacers (34) are attached to the shell carrier (24).

7. Device (11) according to any one of Claims 3 to 6, **characterized in that** the bearing face (18) of the cold moulding shell (12A) comprises recesses (36) the shape of which matches the shape of the spacers (34) so as to allow the bearing surface (18) of the cold moulding shell (12A) to be brought into contact with the support face (26) of the shell carrier (24) to which the spacers (34) remain attached.

8. Device (11) according to any one of the preceding claims, **characterized in that** the cooling means are designed to cool the entire surface of the support face (26) of the shell carrier (24).

9. Device (11) according to any one of the preceding claims, **characterized in that** the thermal insulation means cover the entire bearing face (18) of the hot moulding shell (12B).

10. Device (11) according to any one of the preceding claims, **characterized in that** the bearing face (18) of the hot moulding shell (12C) comprises at least one cooled region (18A) that is in direct contact with the support face (26) of the shell carrier (24), so as to be cooled by the cooling means.

11. Device (11) according to any one of the preceding claims, **characterized in that** the cooling means of the shell carriers (24) are formed by at least one network of channels (28) in which a heat transfer fluid (30) flows.

12. Device (11) according to any one of the preceding claims, **characterized in that** the heating means of each hot moulding shell (12B, 12C) consist of at least one heating electrical resistance (32) accommodated in the thickness of the hot moulding shell (12B, 12C).
